# EUROPEAN PATENT APPLICATION

(11) **EP 3 267 304 A1**
(43) Date of publication of application: **10.01.2018**
(21) Application number: 15887236.6
(22) Date of filing: 15.10.2015
(51) Int. Cl.: G06F 3/06

(54) **STORAGE PARTITION METHOD AND TERMINAL**

(30) Priority: 03.04.2015 CN 201510158197
(71) Applicant: Huawei Technologies Co. Ltd., Shenzhen, Guangdong 518129 (CN)
(72) Inventor: HUANG, Meng, Shenzhen Guangdong 518129 (CN); HUANG, Shengru, Shenzhen Guangdong 518129 (CN); XUE, Jun, Shenzhen Guangdong 518129 (CN)
(74) Representative: Gill Jennings & Every LLP
(86) International application number: PCT/CN2015/091977
(87) International publication number: WO 2016/155282

(57) **Abstract**

A storage partitioning method and a terminal are disclosed. The storage partitioning method is applied to a terminal that includes an eMMC. The eMMC includes a controller and a storage medium. The controller has a partition register. The storage medium includes at least two mutually independent system operating partitions. The at least two mutually independent system operating partitions are obtained by the controller by dividing the storage medium of the eMMC according to predetermined setting of the partition register. The storage partitioning method includes: when the terminal is in a power-on state, enabling only a first system operating partition in the at least two mutually independent system operating partitions, where the first system operating partition has no data exchange with another disabled system operating partition (201); and accessing, by the terminal, data in the first system operating partition (202). One eMMC in a terminal can satisfy different user requirements, and lead to a simple and flexible design with reduced costs.

## Description

This application claims priority to Chinese Patent Application No.201510158197.6, filed with the Chinese Patent Office on April 3, 2015 and entitled "STORAGE PARTITIONING METHOD AND TERMINAL", which is incorporated herein by reference in its entirety.

### TECHNICAL FIELD

The present invention relates to the field of embedded multimedia card (Embedded Multi Media Card, eMMC) storage technologies, and specifically, to a storage partitioning method and a terminal.

### BACKGROUND

Currently, an eMMC is a storage device most widely used in a terminal such as a smartphone or a tablet computer, and is configured to store software, data, and the like in the phone and the tablet computer, for example, store operating system software, application software, a picture, and a text. The eMMC functions as a hard disk in a computer. Functions and performance of the eMMC conform to an international standard specification JESD84. Many storage characteristics are formulated in the specification, and include various aspects such as a response speed, data security, and storage reliability. However, a conflict often occurs between the response speed, the security, and the reliability. For example, enabling a cache function can increase a read/write speed, but also brings a problem of data inconsistency. For another example, to ensure that data is reliably written into the eMMC, many measures such as redundancy and check need to be performed, and inevitably slow down the response speed. Therefore, in a single system, a highest response speed usually cannot coexist with most reliable and secure protection. Currently, a common solution is to compromise, and concessions are made on the response speed, the reliability, and the security.

A controller and a storage medium are included in the eMMC. The controller is responsible for internal and external control and communication. Internally, the controller mainly controls read, write, and erase operations, address space management, and the like of the storage medium. Externally, the controller mainly communicates with a host, receives and responds to an instruction from the host, so as to store data designated by the host into a corresponding storage medium, and read data desired by the host from a corresponding storage medium and send the data to the host. The storage medium generally refers to a NAND flash. There are usually multiple storage media, and the multiple storage media form a storage array.

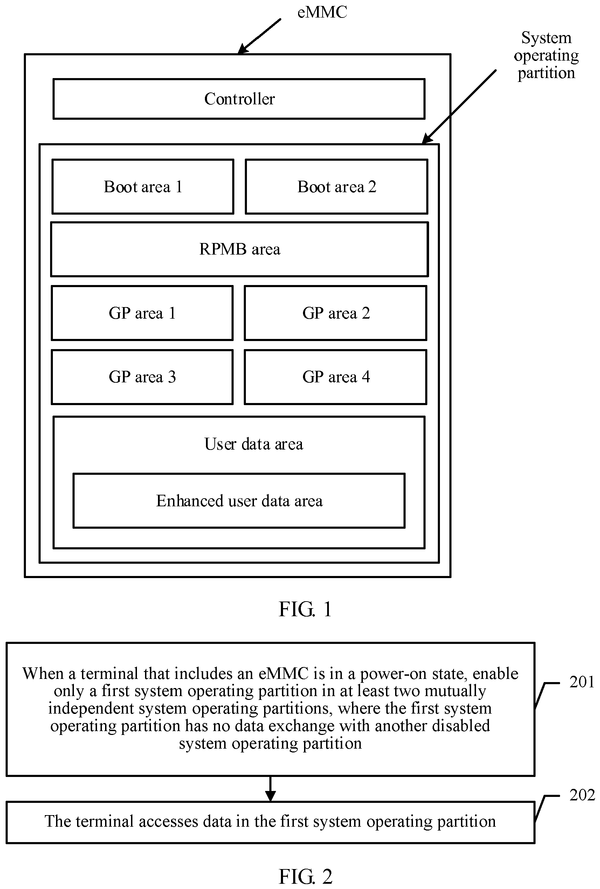

According to the JESD84 specification, currently, all storage media in one eMMC constitute one system operating partition. The system operating partition refers to a storage area that includes a boot partition, an encrypted partition, a general purpose storage area, and a user data storage area. The storage area can independently access all system data and user data in a process of enabling or running a device that includes the eMMC. As shown in FIG. 1, a system operating partition includes a boot area, an RPMB area, a GP area, and a user data area. In FIG. 1, a boot area 1 and a boot area 2 are boot partitions in the system operating partition, and are used to store system boot code. The RPMB area is the encrypted partition in the system operating partition, and is used to store system data that needs relatively high security. GP areas 1 to 4 are general purpose storage areas in the system operating partition, and are used to store default data, key system data, and the like of phone and tablet computer factories. The user data area is the user data storage area in the system operating partition, and is used to store user data, such as an application (application, APP), a picture, video, and a text. The user data area is storage space visible to phone and tablet computer users, and a special protection measure can also be performed in a specific area inside the user data area, that is, an enhanced user data area in FIG. 1. The enhanced user data area has a same function as the user data area, but has a more reliable storage medium, and can store data more reliably.

According to the method in which only one system operating partition exists and different storage partitions take form by means of partition overlapping inside the user data area of the system operating partition, the conflict between the response speed, the reliability, and the security is relieved to some extent. However, the method for partition overlapping inside the user data area may result in problems of virus cross-infection and mutual data disclosure between different partitions. In addition, with increasing complexity of application scenarios of a phone and a tablet computer, and with an increasingly big difference between applications, according to the existing partitioning method, a terminal that has one eMMC cannot satisfy all performance requirements of high speed, high reliability and high security. Different user requirements can be satisfied only by disposing at least two independent storage chips (such as two eMMCs) in the terminal, but this leads to a more complex board design, and higher costs.

### SUMMARY

In view of this, the present invention provides a storage partitioning method and a terminal, so that a terminal that has one eMMC can satisfy different user requirements, and lead to a simple and flexible design with reduced costs.

According to a first aspect, an embodiment of the present invention provides a storage partitioning method, where the storage partitioning method is applied to a terminal that includes an eMMC, the eMMC includes a controller and a storage medium, the controller has a partition register, the storage medium includes at least two mutually independent system operating partitions, the at least two mutually independent system operating partitions are obtained by the controller by dividing the storage medium of the eMMC according to predetermined setting of the partition register, and the method includes:
when the terminal is in a power-on state, enabling only a first system operating partition in the at least two mutually independent system operating partitions, where the first system operating partition has no data exchange with another disabled system operating partition; and
accessing, by the terminal, data in the first system operating partition.

With reference to the first aspect, in a first implementation manner of the first aspect, types of the at least two mutually independent system operating partitions include at least one of the following: a high-speed system operating partition, or a high-reliability high-security system operating partition; where
a rate of accessing data in the high-speed system operating partition is higher than a rate of accessing data in the high-reliability high-security system operating partition; and
reliability and security of accessing data in the high-reliability high-security system operating partition are higher than reliability and security of accessing data in the high-speed system operating partition.

With reference to the first implementation manner of the first aspect, in a second implementation manner of the first aspect, the controller also has a configuration register, and the method further includes:
configuring a storage attribute for each system operating partition according to predetermined setting of a configuration register corresponding to the system operating partition.

With reference to the second implementation manner of the first aspect, in a third implementation manner of the first aspect, a storage attribute of the high-speed system operating partition includes any one or more of the following: a cache on characteristic, a trim characteristic, a discard characteristic, a packed command characteristic, or a context management characteristic; and a storage attribute of the high-reliability high-security system operating partition includes any one or more of the following: a storage medium being an enhanced storage media, a cache off characteristic, a reliable write characteristic, a secure erase characteristic, a secure trim characteristic, a data tag characteristic, a write protection characteristic, or a device locking characteristic.

With reference to the first implementation manner of the first aspect, in a fourth implementation manner of the first aspect, the controller also has a configuration register, and the method further includes:
setting an access password for the high-reliability high-security system operating partition according to predetermined setting of a configuration register corresponding to the high-reliability high-security system operating partition.

With reference to the first implementation manner of the first aspect, in a fifth implementation manner of the first aspect, the controller also has a configuration register, and the method further includes:
setting an access password for the high-speed system operating partition according to predetermined setting of a configuration register corresponding to the high-speed system operating partition.

With reference to the first aspect, or the first, or the second, or the third, or the fourth, or the fifth implementation manner of the first aspect, in a sixth implementation manner of the first aspect, each system operating partition has an operating system.

With reference to the first aspect, or the first, or the second, or the third, or the fourth, or the fifth implementation manner of the first aspect, in a seventh implementation manner of the first aspect, the method further includes:
restarting the terminal to switch between different system operating partitions for working.

According to a second aspect, an embodiment of the present invention provides a terminal, the terminal includes an embedded multimedia card eMMC, and the terminal includes:
a division unit, configured to divide a storage medium of the eMMC into at least two mutually independent system operating partitions;
an enabling unit, configured to: when the terminal is in a power-on state, enable only a first system operating partition in the at least two mutually independent system operating partitions obtained by dividing by the division unit, where the first system operating partition has no data exchange with another disabled system operating partition; and
a processing unit, configured to access data in the first system operating partition enabled by the enabling unit.

With reference to the second aspect, in a first implementation manner of the second aspect, types of the at least two mutually independent system operating partitions include at least one of the following: a high-speed system operating partition, or a high-reliability high-security system operating partition; where
a rate of accessing data in the high-speed system operating partition is higher than a rate of accessing data in the high-reliability high-security system operating partition; and
reliability and security of accessing data in the high-reliability high-security system operating partition are higher than reliability and security of accessing data in the high-speed system operating partition.

With reference to the first implementation manner of the second aspect, in a second implementation manner of the second aspect, the division unit is further configured to configure a storage attribute for each system operating partition.

With reference to the second implementation manner of the second aspect, in a third implementation manner of the second aspect, a storage attribute of the high-speed system operating partition includes any one or more of the following: a cache on characteristic, a trim characteristic, a discard characteristic, a packed command characteristic, or a context management characteristic; and a storage attribute of the high-reliability high-security system operating partition includes any one or more of the following: a storage medium being an enhanced storage media, a cache off characteristic, a reliable write characteristic, a secure erase characteristic, a secure trim characteristic, a data tag characteristic, a write protection characteristic, or a device locking characteristic.

With reference to the first implementation manner of the second aspect, in a fourth implementation manner of the second aspect, the terminal further includes:
a password setting unit, configured to set an access password for the high-reliability high-security system operating partition obtained by dividing by the division unit.

With reference to the first implementation manner of the second aspect, in a fifth implementation manner of the second aspect, the terminal further includes:
a password setting unit, configured to set an access password for the high-speed system operating partition obtained by dividing by the division unit.

With reference to the second aspect, or the first, or the second, or the third, or the fourth, or the fifth implementation manner of the second aspect, in a sixth implementation manner of the second aspect, each system operating partition has an operating system.

With reference to the second aspect, or the first, or the second, or the third, or the fourth, or the fifth implementation manner of the second aspect, in a seventh implementation manner of the second aspect, switching between different system operating partitions for working is performed by restarting.

It can be learned from the foregoing technical solutions that the embodiments of the present invention have the following advantages:

In the embodiments of the present invention, a terminal includes an eMMC, and a storage medium of the eMMC is divided into at least two mutually independent system operating partitions. When the terminal is in a power-on state, only one of the system operating partitions is enabled, and data is accessed only in the enabled system operating partition. The enabled system operating partition has no data exchange with another disabled system operating partition. Data interference, disclosure, and other problems generated by overlapping another partition to a user data storage area in only one system operating partition are avoided. Because a storage medium of one eMMC in a terminal is divided into at least two mutually independent system operating partitions by a controller according to predetermined setting of a partition register, one eMMC in the terminal can satisfy different user requirements, and lead to a simple and flexible design with reduced costs.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings.
FIG. 1 is a schematic structural diagram of an eMMC partition in the prior art;
FIG. 2 is a schematic flowchart of a storage partitioning method according to the present invention;
FIG. 3 is a schematic structural diagram of an eMMC partition according to the present invention;
FIG. 4 is a schematic flowchart of enabling a system operating partition by a terminal according to the present invention;
FIG. 5 is another schematic flowchart of enabling a system operating partition by a terminal according to the present invention;
FIG. 6 is another schematic flowchart of enabling a system operating partition by a terminal according to the present invention;
FIG. 7 is a schematic diagram of an embodiment of a terminal according to the present invention; and
FIG. 8 is a schematic diagram of another embodiment of a terminal according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention shall fall within the protection scope of the present invention.

In the prior art, when a terminal has one eMMC, all storage media in the eMMC constitute one system operating partition, and data access is all performed in the system operating partition. However, as complexity of application scenarios increases and a difference between applications increases, according to an existing storage partitioning manner, one eMMC in a terminal cannot satisfy different user requirements. For example, all applications are stored in one system operating partition, and requirements of different applications for storage characteristics cannot be satisfied. An authorized application is easily captured by an unauthorized application or virus software, thereby causing information disclosure. Applications downloaded by different family members can be stored only in a same system operating partition, and as a result, information isolation and privacy protection cannot be implemented.

The present invention provides a storage partitioning method and a terminal. One eMMC in a terminal can satisfy different user requirements, and lead to a simple and flexible design with reduced costs.

Referring to FIG. 2, an embodiment of a storage partitioning method in the present invention includes the following steps.

Step 201: When a terminal that includes an eMMC is in a power-on state, enable only a first system operating partition in at least two mutually independent system operating partitions, where the first system operating partition has no data exchange with another disabled system operating partition.

In specific implementation, the first system operating partition may be a system operating partition chosen by a user according to a requirement and preference of the user from the at least two mutually independent system operating partitions, or may be a default system operating partition if a user does not choose any system operating partition. The system operating partition may be a high-speed system operating partition, or a high-reliability high-security system operating partition.

In this embodiment, the terminal may have only one eMMC, and the eMMC serves as a memory of the terminal. The eMMC includes a controller and a storage medium. The controller functions as a processor of the eMMC, and a corresponding software program is installed in the controller. The storage medium may be a NAND flash. There may be one or more storage media. When there are multiple storage media, the multiple storage media may form a storage array. Therefore, the storage medium described in the following may refer to one storage medium, or a storage array formed by multiple storage media.

The controller has a partition register. The storage medium includes at least two mutually independent system operating partitions. The at least two mutually independent system operating partitions are obtained by the controller by dividing the storage medium of the eMMC according to predetermined setting of the partition register. In specific implementation, during manufacture of a terminal, a user (that is, a terminal manufacturer) may determine, according to a market requirement, whether a storage medium of an eMMC needs to be partitioned. If the storage medium of the eMMC needs to be partitioned, partitioning can be implemented by setting a partition register. For example, the user sets a value of the partition register to 1 when partitioning is required, and the user sets a value of the partition register to 0 when partitioning is not required (vice versa). When the value of the partition register is 1, a controller may divide the storage medium into at least two mutually independent system operating partitions according to a physical address of the storage medium. For example, by means of division, a storage medium with a physical address from 0 to 10000 serves as a system operating partition 1, and a storage medium with a physical address from 10001 to 50000 serves as a system operating partition 2. After division is complete, the controller maps a logical address to a physical address.

In specific implementation, types of the at least two mutually independent system operating partitions include at least one of the following: a high-speed system operating partition, or a high-reliability high-security system operating partition. That is, the at least two mutually independent system operating partitions may be at least two high-speed system operating partitions, or at least two high-reliability high-security system operating partitions, or at least one high-speed system operating partition and at least one high-reliability high-security system operating partition. Mutual independence means that data in one system operating partition is isolated from data in another system operating partition without interference.

The high-speed system operating partition can ensure a data access rate, and a rate of accessing data in the high-speed system operating partition is higher than a rate of accessing data in the high-reliability high-security system operating partition. The high-speed system operating partition can be used to satisfy running requirements of application software that needs a high-speed and efficient storage performance. Applications such as network surfing, games, and videos may be stored into the high-speed system operating partition.

The high-reliability high-security system operating partition can ensure reliability and security of accessing data. The reliability may refer to data storage accuracy without redundancy, and the security may refer to difficulty in disclosing and stealing data. Reliability and security of accessing data in the high-reliability high-security system operating partition are higher than reliability and security of accessing data in the high-speed system operating partition. The high-reliability high-security system operating partition can be used to satisfy running requirements of application software that needs high-reliability and high-security storage characteristics. Applications such as finance and payment may be stored into the high-reliability high-security system operating partition.

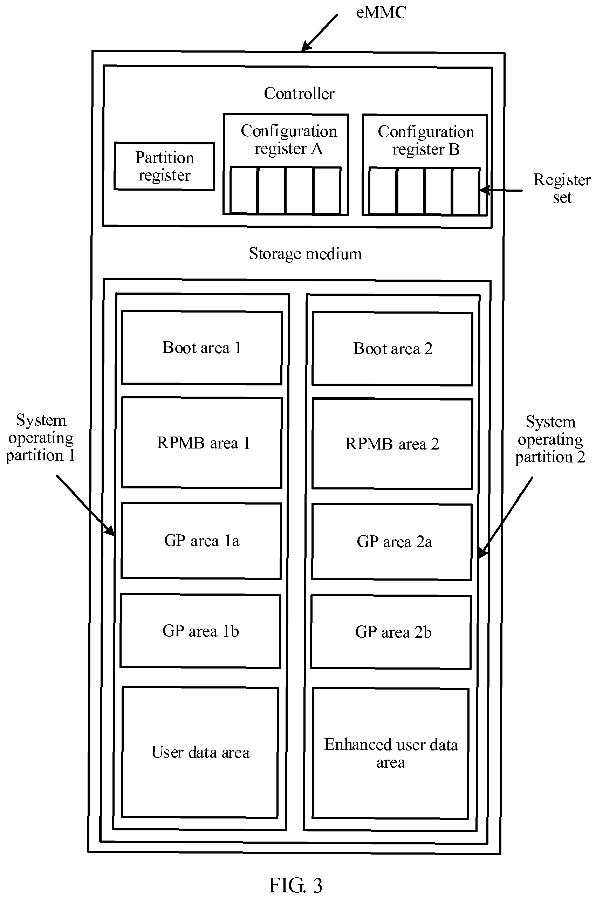

In a specific embodiment, if the controller divides the storage medium of the eMMC into two system operating partitions according to setting of the partition register by the user, the user may configure a storage attribute of each system operating partition by setting a configuration register corresponding to the system operating partition. For example, as shown in FIG. 3, there is a system operating partition 1 and a system operating partition 2, a configuration register corresponding to the system operating partition 1 is a configuration register A, and a configuration register corresponding to the system operating partition 2 is a configuration register B.

It should be noted that, FIG. 3 illustrates only the partition register and the configuration registers in the controller. In actual application, the controller also has a micro control unit (Micro Controller Unit, MCU). The MCU has a corresponding memory (such as a static random access memory, a read-only memory, an integrated random memory, and a dynamic random access memory), and a software program in the controller is installed in the memory of the MCU. The controller also has a storage medium control interface. The MCU partitions the storage medium according to the setting of the partition register by using the storage medium control interface. When receiving a data access instruction (the data access instruction needs to be parsed and processed by using an eMMC protocol) sent by the processor of the terminal, the MCU accesses data in the current system operating partition according to the data access instruction and the setting of the configuration register by using the storage medium control interface. In addition, the controller also has registers that are configured to set a boot partition, an encrypted partition, and a general purpose storage area. The MCU obtains, by means of dividing, a boot partition (such as a boot area 1 and a boot area 2 in FIG. 3), an encrypted partition (such as an RPMB area 1 and an RPMB area 1 in FIG. 3), and a general purpose storage area (such as GP areas 1a to 2b in FIG. 3) in each system operating partition according to configurations of these registers by using the storage medium control interface. An area other than these areas in each system operating partition is a user data storage area. In addition, the controller also has a peripheral control interface, a module that connects to the storage medium control interface and is configured to manage and maintain the storage medium, and the like. Details are not described herein.

A storage attribute of the high-speed system operating partition includes any one or more of the following: a cache on characteristic (Cache On), a trim characteristic (Trim), a discard characteristic (Discard), a packed command characteristic (Packed Commands), a context management characteristic (Context Management), or the like. A storage attribute of the high-reliability high-security system operating partition includes any one or more of the following: a storage medium being an enhanced storage medium (Enhanced Storage Media), a cache off characteristic (Cache Off), a reliable write characteristic (Reliable Write), a secure erase characteristic (Secure Erase), a secure trim characteristic (Secure Trim), a data tag characteristic (Data Tag), a write protection characteristic (Write Protect), a device locking characteristic (Device Lock), or the like.

In specific implementation, the configuration register A and the configuration register B each may include a register set. The user may perform storage configuration for the system operating partition 1 by setting a register set included in the configuration register A, and perform storage configuration for the system operating partition 2 by setting a register set included in the configuration register B. For example, the register set included in the configuration register B has a register that is configured to control a write characteristic. If the user wants to configure a reliable write characteristic for the system operating partition 2, the user may set a value of the register for controlling the reliable write to 1. Setting the value of the register for controlling the reliable write to 1 indicates that all data being written into the system operating partition 2 needs to be written according to a reliable write rule.

In addition, the high-reliability high-security system operating partition may have an access password. The access password for the high-reliability high-security system operating partition may be obtained by presetting a configuration register corresponding to the high-reliability high-security system operating partition.

The high-speed system operating partition may also have an access password. The access password for the high-speed system operating partition may also be obtained by presetting a configuration register corresponding to the high-speed system operating partition.

Each system operating partition has an operating system.

In specific implementation, a partition configuration procedure may be as follows:

Step 1: Set a partition register. For example, setting a value of the partition register to 1 means partitioning. In a case of partitioning, go to step 2. Setting a value of the partition register to 0 means no partitioning. In a case of no partitioning, go to step 3.

Step 2: Set a configuration register corresponding to each system operating partition. If a specific system operating partition in multiple partitions needs to be set as a high-speed system operating partition, a configuration register corresponding to the system operating partition may be set. For example, a value of a register that is configured to control a cache characteristic and that is in the configuration register corresponding to the system operating partition is set to 1 (that is, the cache characteristic is turned on for the system operating partition), a value of a register that is configured to control a trim characteristic and that is in the configuration register corresponding to the system operating partition is set to 1 (that is, the system operating partition has the trim characteristic), and the like. If a specific system operating partition in multiple partitions needs to be set as a high-reliability high-security system operating partition, a configuration register corresponding to the system operating partition may be set. For example, a value of a register that is configured to control a write characteristic and that is in the configuration register corresponding to the system operating partition is set to 1 (that is, all data needs to be reliably written into the system operating partition), a value of a register that is configured to control an erase characteristic and that is in the configuration register corresponding to the system operating partition is set to 1 (that is, data in the system operating partition needs to be reliably erased), and the like. In addition, in the case of partitioning, a specific system operating partition in multiple partitions may be set as an ordinary system operating partition, that is, a configuration register of the system operating partition is set, to make concessions on a response speed, reliability, and security of the system operating partition. In a partitioning mode, there are at least two system operating partitions. The system operating partitions have one or more types, and the user can choose a data access partition.

Step 3: Set a configuration register of a whole system operating partition. In the case of no-partitioning, the configuration register of the whole system operating partition may be set, so that the whole system operating partition becomes any one of a high-speed system operating partition, a high-reliability high-security system operating partition, or an ordinary system operating partition. In a no-partitioning mode, there is only one system operating partition of only one type, and all data can be accessed only in this system operating partition.

Storage medium partitioning may be set before delivery of a terminal that includes an eMMC storage device, and cannot be modified subsequently. That is, for the terminal that includes the eMMC storage device, whether to partition the storage medium of the terminal and a partition quantity can be set before delivery of the terminal. If the storage medium of the terminal is not partitioned before delivery, the terminal is always in a no-partitioning mode, that is, the terminal has only one system operating partition. If the storage medium of the terminal is partitioned before delivery, the terminal is always in a partitioning mode, that is, the terminal includes at least two system operating partitions, and the partition quantity is generally not allowed to be modified.

For a terminal that is partitioned before delivery, when the terminal is in a power-on state, a client directly chooses a system operating partition that needs to be used (if the client does not make a choice, a default system operating partition is directly enabled), such as a first system operating partition (for example, a storage medium with a physical address from 0 to 10000), and the terminal enables only the first system operating partition. The enabled system operating partition has no data exchange with another disabled system operating partition. Specifically, in the foregoing example, enabling only the first system operating partition refers to: enabling only an operating system of the first system operating partition, performing an operation (such as a data access) only in the storage medium with the physical address from 0 to 10000, disabling an operating system of another system operating partition, and not performing an operation in another storage medium with another physical address (such as from 10001 to 50000). A system operating partition in which no operation is performed can be construed in a disabled state.

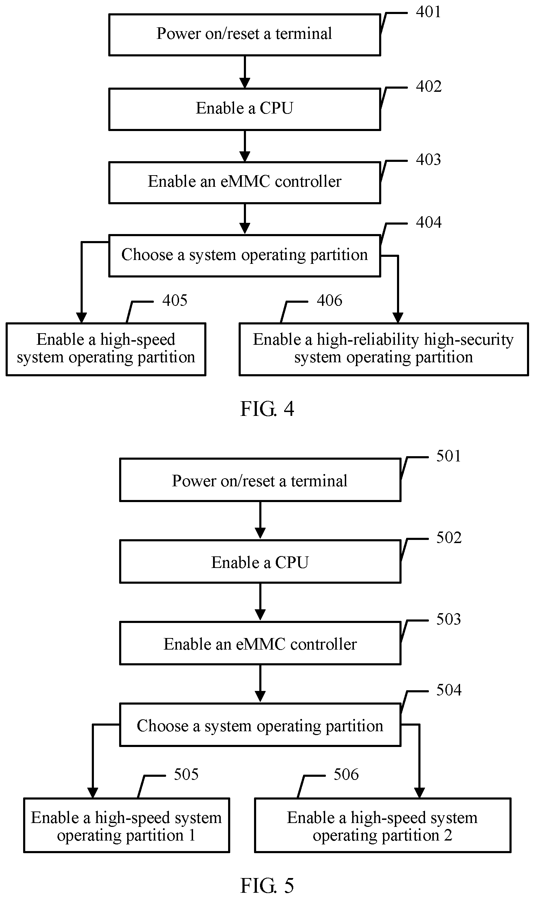

In the partitioning mode, for example, the storage medium of the eMMC is divided into a high-speed system operating partition and a high-reliability high-security system operating partition. The high-speed system operating partition is used to store an application that needs a high-speed and efficient storage performance (applications such as network surfing and games), and the high-reliability high-security system operating partition is used to store an application that needs reliability and security for storing data (applications such as finance and payment). In this case, an enabling procedure of a system operating partition may be shown in FIG. 4. In step 401, a terminal is powered on or reset. Then step 402 is performed to enable a central processing unit (Central Processing Unit, CPU), to enter a system initialization phase. In this phase, an operating system 1 needs to be installed in the high-speed system operating partition and configuration of a high-speed storage attribute needs to be complete, and an operating system 2 needs to be installed in the high-reliability high-security system operating partition and configuration of a high-reliability high-security storage attribute needs to be complete. Then step 403 is performed to enable a controller of the eMMC. In step 404, a user may choose a system operating partition that needs to be used. If the user chooses the high-speed system operating partition, step 405 is performed to enable the operating system of the high-speed system operating partition. If the user chooses the high-reliability high-security system operating partition, step 406 is performed to enable the operating system of the high-reliability high-security system operating partition. If an access password is preset for the high-reliability system operating partition, the user needs to enter the preset access password before enabling the operating system of the high-reliability high-security system operating partition.

Alternatively, the storage medium of the eMMC is divided into two high-speed system operating partitions (a high-speed system operating partition 1 and a high-speed system operating partition 2) for different users to easily use the terminal, for example, applications downloaded by different family members can be stored in different high-speed system operating partitions. In this case, an enabling procedure of a system operating partition may be shown in FIG. 5. In step 501, a terminal is powered on or reset. Then step 502 is performed to enable a CPU, to enter a system initialization phase. In this phase, an operating system 1 needs to be installed in the high-speed system operating partition 1 and configuration of a high-speed storage attribute needs to be complete, and an operating system 2 needs to be installed in the high-speed system operating partition 2 and configuration of a high-speed storage attribute needs to be complete. Then step 503 is performed to enable a controller of the eMMC. In step 504, a user may choose a system operating partition that needs to be used. If the user chooses the high-speed system operating partition 1, step 505 is performed to enable the operating system of the high-speed system operating partition 1. If the user chooses the high-speed system operating partition 2, step 506 is performed to enable the operating system of the high-speed system operating partition 2.

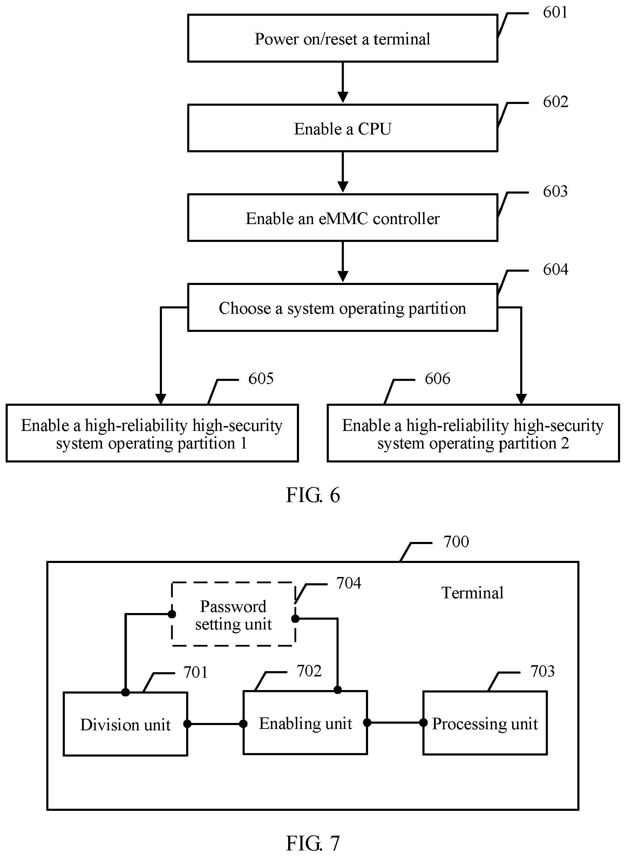

Alternatively, the storage medium of the eMMC is divided into two high-reliability high-security system operating partitions (a high-reliability high-security system operating partition 1 and a high-reliability high-security system operating partition 2) for different users to easily use the terminal, for example, applications downloaded by different family members can be stored in different high-reliability high-security system operating partitions. In this case, an enabling procedure of a system operating partition may be shown in FIG. 6. In step 601, a terminal is powered on or reset. Then step 602 is performed to enable a CPU, to enter a system initialization phase. In this phase, an operating system 1 needs to be installed in the high-reliability high-security system operating partition 1 and configuration of a high-reliability high-security storage attribute needs to be complete, and an operating system 2 needs to be installed in the high-reliability high-security system operating partition 2 and configuration of a high-reliability high-security storage attribute needs to be complete. Then step 603 is performed to enable a controller of the eMMC. In step 604, a user may choose a system operating partition that needs to be used. If the user chooses the high-reliability high-security system operating partition 1, step 605 is performed to enable the operating system of the high-reliability high-security system operating partition 1. If the user chooses the high-reliability high-security system operating partition 2, step 606 is performed to enable the operating system of the high-reliability high-security system operating partition 2. If access passwords are preset for the two high-reliability high-security system operating partitions, the user needs to enter a preset access password before enabling an operating system of a corresponding high-reliability high-security system operating partition.

Step 202: The terminal accesses data in the first system operating partition.

When data needs to be accessed, the terminal obtains a logical address of the data, maps the logical address to a physical address of the first system operating partition, and directly accesses the data in the first system operating partition.

Switching between different system operating partitions for working may be performed by restarting. For example, when the terminal is powered on, the client chooses to enable the first system operating partition. After a period of time, if the client wants to use a second system operating partition, the terminal can be restarted, and the client chooses to enable the second system operating partition after the terminal is restarted. Certainly, switching between different system operating partitions for working may not be performed by restarting. For example, switching between different system operating partitions for working is controlled by using software setting.

In this embodiment, a terminal includes an eMMC, and a storage medium of the eMMC is divided into at least two mutually independent system operating partitions. When the terminal is in a power-on state, only one of the system operating partitions is enabled, and data is accessed only in the enabled system operating partition. The enabled system operating partition has no data exchange with another disabled system operating partition. Data interference, disclosure, and other problems generated by overlapping another partition to a user data storage area in only one system operating partition are avoided. Because a storage medium of one eMMC in a terminal is divided into at least two mutually independent system operating partitions by a controller according to predetermined setting of a partition register, one eMMC in the terminal can satisfy different user requirements, and lead to a simple and flexible design with reduced costs.

A terminal according to an embodiment of the present invention is described in the following. The terminal according to this embodiment of the present invention includes an eMMC. The eMMC includes a controller and a storage medium. The controller has a partition register, and the storage medium includes at least two mutually independent system operating partitions. The at least two mutually independent system operating partitions are obtained by the controller by dividing the storage medium of the eMMC according to predetermined setting of the partition register. Referring to FIG. 7, the terminal in this embodiment includes:
a division unit 701, configured to divide the storage medium of the eMMC into at least two mutually independent system operating partitions;
an enabling unit 702, configured to: when the terminal is in a power-on state, enable only a first system operating partition in the at least two mutually independent system operating partitions obtained by dividing by the division unit 701, where the first system operating partition has no data exchange with another disabled system operating partition; and
a processing unit 703, configured to access data in the first system operating partition enabled by the enabling unit 702.

In addition, the terminal 700 may further include a password setting unit 704. The password setting unit 704 is configured to set an access password for a high-reliability high-security system operating partition obtained by dividing by the division unit 701.

Alternatively, the password setting unit 704 is configured to set an access password for a high-speed system operating partition obtained by dividing by the division unit 701.

In specific implementation, the first system operating partition may be any system operating partition chosen by a user from the at least two mutually independent system operating partitions, or may be a default system operating partition if a user does not choose any system operating partition. The system operating partition may be a high-speed system operating partition, or a high-reliability high-security system operating partition.

In specific implementation, the terminal may include only one eMMC. The eMMC has a partition register. The partition register is configured to instruct whether to partition the storage medium. For example, when partitioning is required, a value of the partition register may be set to 1; when partitioning is not required, a value of the partition register may be set to 0. The division unit 701 divides the storage medium of the eMMC into the at least two mutually independent system operating partitions according to setting of the partition register. For example, by means of division, a storage medium with a physical address from 0 to 10000 serves as a system operating partition 1, and a storage medium with a physical address from 10001 to 50000 serves as a system operating partition 2.

Types of the at least two mutually independent system operating partitions include at least one of the following: a high-speed system operating partition, or a high-reliability high-security system operating partition. That is, the at least two mutually independent system operating partitions may be at least two high-speed system operating partitions, or at least two high-reliability high-security system operating partitions, or at least one high-speed system operating partition and at least one high-reliability high-security system operating partition. Mutual independence means that data in one system operating partition is isolated from data in another system operating partition without interference.

The high-speed system operating partition can ensure a data access rate, and a rate of accessing data in the high-speed system operating partition is higher than a rate of accessing data in the high-reliability high-security system operating partition. The high-speed system operating partition can be used to satisfy running requirements of application software that needs a high-speed and efficient storage performance. Applications such as network surfing, games, and videos may be stored into the high-speed system operating partition.

The high-reliability high-security system operating partition can ensure reliability and security of accessing data. The reliability may refer to data storage accuracy without redundancy, and the security may refer to difficulty in disclosing and stealing data. Reliability and security of accessing data in the high-reliability high-security system operating partition are higher than reliability and security of accessing data in the high-speed system operating partition. The high-reliability high-security system operating partition can be used to satisfy running requirements of application software that needs high-reliability and high-security storage characteristics. Applications such as finance and payment may be stored into the high-reliability high-security system operating partition.

After dividing the storage medium of the eMMC into the at least two mutually independent system operating partitions, the division unit 701 can perform storage configuration for each system operating partition.

A storage attribute of the high-speed system operating partition includes any one or more of the following: a cache on characteristic (Cache On), a trim characteristic (Trim), a discard characteristic (Discard), a packed command characteristic (Packed Commands), a context management characteristic (Context Management), or the like. A storage attribute of the high-reliability high-security system operating partition includes any one or more of the following: a storage medium being an enhanced storage medium (Enhanced Storage Media), a cache off characteristic (Cache Off), a reliable write characteristic (Reliable Write), a secure erase characteristic (Secure Erase), a secure trim characteristic (Secure Trim), a data tag characteristic (Data Tag), a write protection characteristic (Write Protect), a device locking characteristic (Device Lock), or the like.

Each system operating partition has a corresponding configuration register. The division unit 701 can configure each system operating partition according to setting of a configuration register corresponding to the system operating partition, to configure the system operating partition as a high-speed system operating partition or a high-reliability high-security system operating partition. In addition, the password setting unit 704 may further set an access password for the high-reliability high-security system operating partition obtained by dividing by the division unit 701, or the password setting unit 704 may further set an access password for the high-speed system operating partition obtained by dividing by the division unit 701.

Storage medium partitioning may be set before delivery of a terminal that includes an eMMC storage device, and cannot be modified subsequently. That is, for the terminal that includes the eMMC storage device, whether to partition the storage medium of the terminal and a partition quantity can be set before delivery of the terminal. If the storage medium of the terminal is not partitioned before delivery, the terminal is always in a no-partitioning mode, that is, the terminal has only one system operating partition. If the storage medium of the terminal is partitioned before delivery, the terminal is always in a partitioning mode, that is, the terminal includes at least two system operating partitions, and the partition quantity is generally not allowed to be modified.

For a terminal that is partitioned before delivery, when the terminal is in a power-on state, a client directly chooses a system operating partition that needs to be used (if the client does not make a choice, the enabling unit 702 directly enables a default system operating partition), such as a first system operating partition (for example, a storage medium with a physical address from 0 to 10000), and the enabling unit 702 enables only the first system operating partition. The enabled system operating partition has no data exchange with another disabled system operating partition. Specifically, in the foregoing example, enabling only the first operating partition refers to the following: The enabling unit 702 enables only an operating system of the first system operating partition, the processing unit 703 performs an operation (such as data access) only in the storage medium with the physical address from 0 to 10000, the enabling unit 702 does not enable an operating system of another system operating partition, and the processing unit 703 does not perform an operation in another storage medium with another physical address (such as from 10001 to 50000). A system operating partition in which no operation is performed can be construed in a disabled state.

In the partitioning mode, for example, the division unit 701 divides the storage medium of the eMMC into a high-speed system operating partition and a high-reliability high-security system operating partition. The high-speed system operating partition is used to store an application that needs a high-speed and efficient storage performance (applications such as network surfing and games), and the high-reliability high-security system operating partition is used to store an application that needs reliability and security for storing data (applications such as finance and payment). In a system initialization phase, an operating system 1 needs to be installed in the high-speed system operating partition and configuration of a high-speed storage attribute needs to be complete, and an operating system 2 needs to be installed in the high-reliability high-security system operating partition and configuration of a high-reliability high-security storage attribute needs to be complete. After the terminal is powered on, the user can choose a system operating partition that needs to be used. Then the enabling unit 702 enables only an operating system of the system operating partition that is chosen by the user and that needs to be used.

Alternatively, the division unit 701 divided the storage medium of the eMMC into two high-speed system operating partitions (a high-speed system operating partition 1 and a high-speed system operating partition 2) for different users to easily use the terminal, for example, applications downloaded by different family members can be stored in different high-speed system operating partitions. In a system initialization phase, an operating system 1 needs to be installed in the high-speed system operating partition 1 and configuration of a high-speed storage attribute needs to be complete, and an operating system 2 needs to be installed in the high-speed system operating partition 2 and configuration of a high-speed storage attribute needs to be complete. After the terminal is powered on, the user can choose a system operating partition that needs to be used. Then the enabling unit 702 enables only an operating system of the system operating partition that is chosen by the user and that needs to be used.

Alternatively, the division unit 701 divides the storage medium of the eMMC into two high-reliability high-security system operating partitions (a high-reliability high-security system operating partition 1 and a high-reliability high-security system operating partition 2) for different users to easily use the terminal, for example, applications downloaded by different family members can be stored in different high-reliability high-security system operating partitions. In a system initialization phase, an operating system 1 needs to be installed in the high-reliability high-security system operating partition 1 and configuration of a high-reliability high-security storage attribute needs to be complete, and an operating system 2 needs to be installed in the high-reliability high-security system operating partition 2 and configuration of a high-reliability high-security storage attribute needs to be complete. After the terminal is powered on, the user can choose a system operating partition that needs to be used. Then the enabling unit 702 enables only an operating system of the system operating partition that is chosen by the user and that needs to be used.

The processing unit 703 accesses data in the system operating partition enabled by the enabling unit 702. That is, when data needs to be accessed, the processing unit 703 obtains a logical address of the data, maps the logical address to a physical address of the enabled system operating partition, and directly accesses the data in the system operating partition.

Switching between different system operating partitions for working may be performed by restarting. For example, when the terminal is powered on, the client chooses to enable the first system operating partition. After a period of time, if the client wants to use a second system operating partition, the terminal can be restarted, and the client chooses to enable the second system operating partition after the terminal is restarted. Certainly, switching between different system operating partitions for working may not be performed by restarting. For example, switching between different system operating partitions for working is controlled by using software setting.

For conciseness of description, steps are not described in detail in this embodiment, and reference may be made to descriptions in the foregoing method embodiment.

In this embodiment, a terminal includes an eMMC, and a division unit divides a storage medium of the eMMC into at least two mutually independent system operating partitions. When the terminal is in a power-on state, an enabling unit enables only one of the system operating partitions, and a processing unit accesses data only in the enabled system operating partition. The enabled system operating partition has no data exchange with another disabled system operating partition. Data interference, disclosure, and other problems generated by overlapping another partition to a user data storage area in only one system operating partition are avoided. Because a storage medium of one eMMC in a terminal is divided into at least two mutually independent system operating partitions by a division unit according to predetermined setting of a partition register, one eMMC in the terminal can satisfy different user requirements, and lead to a simple and flexible design with reduced costs.

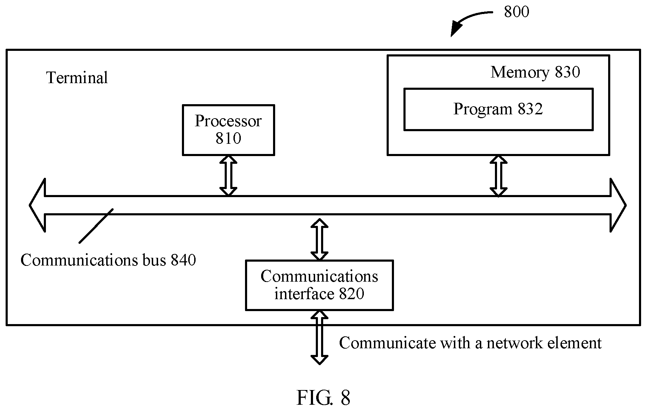

A terminal in an embodiment of the present invention is further described in the following. Referring to FIG. 8, a terminal 800 includes:
a processor (processor) 810, a communications interface (Communications Interface) 820, a memory (memory) 830, and a bus 840.

The processor 810, the communications interface 820, and the memory 830 communicate with one another by using the bus 840.

The communications interface 820 is configured to communicate with another device.

The processor 810 is configured to perform a program 832.

Specifically, the program 832 may include program code, and the program code includes a computer operation instruction.

The processor 810 may be a central processing unit CPU, or an application specific integrated circuit ASIC (Application Specific Integrated Circuit), or one or more integrated circuits configured to implement this embodiment of the present invention.

The memory 830 is configured to store the program 832. Specifically, in this embodiment, the memory 830 may be the eMMC described in the foregoing embodiments. The eMMC includes a controller and a storage medium. The controller interacts with the processor 810, reads data desired by the processor 810 from the storage medium and sends the data to the processor, and stores data designated by the processor to a corresponding storage medium. The controller has a partition register. The storage medium includes at least two mutually independent system operating partitions. The at least two mutually independent system operating partitions are obtained by the controller by dividing the storage medium of the eMMC according to predetermined setting of the partition register under the control of the processor 810.

Specifically, in this embodiment, the processor 810 performs the program 832 stored in the memory 830 to implement the following functions:
dividing the storage medium of the eMMC into at least two mutually independent system operating partitions;
when the terminal is in a power-on state, enabling only a first system operating partition in the at least two mutually independent system operating partitions, where the first system operating partition has no data exchange with another disabled system operating partition; and
accessing data in the first system operating partition.

Optionally, types of the at least two mutually independent system operating partitions include at least one of the following: a high-speed system operating partition, or a high-reliability high-security system operating partition.

A rate of accessing data in the high-speed system operating partition is higher than a rate of accessing data in the high-reliability high-security system operating partition.

Reliability and security of accessing data in the high-reliability high-security system operating partition are higher than reliability and security of accessing data in the high-speed system operating partition.

Optionally, the processor 810 is further configured to configure a storage attribute for each system operating partition.

Optionally, a storage attribute of the high-speed system operating partition includes any one or more of the following: a cache on characteristic, a trim characteristic, a discard characteristic, a packed command characteristic, or a context management characteristic. A storage attribute of the high-reliability high-security system operating partition includes any one or more of the following: a storage medium being an enhanced storage medium, a cache off characteristic, a reliable write characteristic, a secure erase characteristic, a secure trim characteristic, a data tag characteristic, a write protection characteristic, or a device locking characteristic.

Optionally, the processor 810 is further configured to set an access password for the high-reliability high-security system operating partition.

Optionally, the processor 810 is further configured to set an access password for the high-speed system operating partition.

Optionally, each system operating partition has an operating system.

Optionally, switching between different system operating partitions for working is performed by restarting.

It should be noted that, the foregoing described apparatus embodiments are merely examples. The units described as separate parts may be or may not be physically separate. Some or all the modules may be chosen according to actual requirements to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

What is described in detail is a storage partitioning method and a terminal according to the embodiments of the present invention. With respect to specific implementation and applicability of the present invention, modifications and variations may be made by a person of ordinary skill in the art according to the idea of the embodiments of the present invention. Therefore, this specification shall not be construed as a limitation on the present invention.

## Claims

1. A storage partitioning method, wherein the storage partitioning method is applied to a terminal that comprises an embedded multimedia card eMMC, the eMMC comprises a controller and a storage medium, the controller has a partition register, the storage medium comprises at least two mutually independent system operating partitions, the at least two mutually independent system operating partitions are obtained by the controller by dividing the storage medium of the eMMC according to predetermined setting of the partition register, and the method comprises:
when the terminal is in a power-on state, enabling only a first system operating partition in the at least two mutually independent system operating partitions, wherein the first system operating partition has no data exchange with another disabled system operating partition; and
accessing, by the terminal, data in the first system operating partition.

2. The method according to claim 1, wherein types of the at least two mutually independent system operating partitions comprise at least one of the following: a high-speed system operating partition, or a high-reliability high-security system operating partition; wherein
a rate of accessing data in the high-speed system operating partition is higher than a rate of accessing data in the high-reliability high-security system operating partition; and
reliability and security of accessing data in the high-reliability high-security system operating partition are higher than reliability and security of accessing data in the high-speed system operating partition.

3. The method according to claim 2, wherein the controller also has a configuration register, and the method further comprises:
configuring a storage attribute for each system operating partition according to predetermined setting of a configuration register corresponding to the system operating partition.

4. The method according to claim 3, wherein
a storage attribute of the high-speed system operating partition comprises any one or more of the following: a cache on characteristic, a trim characteristic, a discard characteristic, a packed command characteristic, or a context management characteristic; and a storage attribute of the high-reliability high-security system operating partition comprises any one or more of the following: a storage medium being an enhanced storage medium, a cache off characteristic, a reliable write characteristic, a secure erase characteristic, a secure trim characteristic, a data tag characteristic, a write protection characteristic, or a device locking characteristic.

5. The method according to claim 2, wherein the controller also has a configuration register, and the method further comprises:
setting an access password for the high-reliability high-security system operating partition according to predetermined setting of a configuration register corresponding to the high-reliability high-security system operating partition.

6. The method according to claim 2, wherein the controller also has a configuration register, and the method further comprises:
setting an access password for the high-speed system operating partition according to predetermined setting of a configuration register corresponding to the high-speed system operating partition.

7. The method according to any one of claims 1 to 6, wherein each system operating partition has an operating system.

8. The method according to any one of claims 1 to 6, wherein the method further comprises:
restarting the terminal to switch between different system operating partitions for working.

9. A terminal, wherein the terminal comprises an embedded multimedia card eMMC, and the terminal comprises:
a division unit, configured to divide a storage medium of the eMMC into at least two mutually independent system operating partitions;
an enabling unit, configured to: when the terminal is in a power-on state, enable only a first system operating partition in the at least two mutually independent system operating partitions obtained by dividing by the division unit, wherein the first system operating partition has no data exchange with another disabled system operating partition; and
a processing unit, configured to access data in the first system operating partition enabled by the enabling unit.

10. The terminal according to claim 9, wherein types of the at least two mutually independent system operating partitions comprise at least one of the following: a high-speed system operating partition, or a high-reliability high-security system operating partition; wherein
a rate of accessing data in the high-speed system operating partition is higher than a rate of accessing data in the high-reliability high-security system operating partition; and
reliability and security of accessing data in the high-reliability high-security system operating partition are higher than reliability and security of accessing data in the high-speed system operating partition.

11. The terminal according to claim 10, wherein the division unit is further configured to configure a storage attribute for each system operating partition.

12. The terminal according to claim 11, wherein a storage attribute of the high-speed system operating partition comprises any one or more of the following: a cache on characteristic, a trim characteristic, a discard characteristic, a packed command characteristic, or a context management characteristic; and a storage attribute of the high-reliability high-security system operating partition comprises any one or more of the following: a storage medium being an enhanced storage medium, a cache off characteristic, a reliable write characteristic, a secure erase characteristic, a secure trim characteristic, a data tag characteristic, a write protection characteristic, or a device locking characteristic.

13. The terminal according to claim 10, wherein the terminal further comprises:
a password setting unit, configured to set an access password for the high-reliability high-security system operating partition obtained by dividing by the division unit.

14. The terminal according to claim 10, wherein the terminal further comprises:
a password setting unit, configured to set an access password for the high-speed system operating partition obtained by dividing by the division unit.

15. The terminal according to any one of claims 9 to 14, wherein each system operating partition has an operating system.

16. The terminal according to any one of claims 9 to 14, wherein switching between different system operating partitions for working is performed by restarting.
